# EUROPÄISCHE PATENTSCHRIFT

(11) **EP 2 837 139 B1**
(45) Veröffentlichungstag und Bekanntmachung des Hinweises auf die Patenterteilung: **19.08.2020**
(21) Anmeldenummer: 13706203.0
(22) Anmeldetag: 14.02.2013
(51) Int. Cl.: H04L 12/28, H04L 29/08

(54) **INTERAKTIONSFÄHIGER BAUSTEIN IN EINEM NETZWERK**
INTERACTIVE MODULE IN A NETWORK
COMPOSANT À CAPACITÉ D'INTERACTION DANS UN RÉSEAU

(30) Priorität: 12.04.2012 DE 102012205971
(43) Veröffentlichungstag der Anmeldung: 18.02.2015
(73) Patentinhaber: Robert Bosch GmbH, 70442 Stuttgart (DE)
(72) Erfinder: BURGER-SCHEIDLIN, Christoph, 81667 Muenchen (DE); BARISIC, Daniel, 85540 Haar (DE); GRUBER, Tobias, 81825 Muenchen (DE); PFEFFERSEDER, Anton, 82054 Sauerlach (DE); ALJAZZAR, Husain, 81825 Muenchen (DE); STEGEMANN, Dirk, 81927 Muenchen (DE)
(86) Internationale Anmeldenummer: PCT/EP2013/052986
(87) Internationale Veröffentlichungsnummer: WO 2013/152883

(56) Entgegenhaltungen:
- WO-A1-02/17082
- US-A1- 2004 133 848
- US-A1- 2004 205 564

## Beschreibung

Die vorliegende Erfindung betrifft einen Baustein zur Einbettung in ein Kommunikationssystem, ein Verfahren zur Realisierung einer Interaktionsfähigkeit eines Bausteins in einem Netzwerk und ein Kommunikationssystem mit einem Baustein.

### Stand der Technik

Kleine Bauteile, wie Sensoren oder Aktoren, wie sie beispielsweise in der Gebäude- oder Haushaltsautomation eingebettet werden, sind gegenwärtig nicht in der Lage, in Computernetzwerken wie dem Internet zu interagieren. Daher können Systeme, die von derartigen eingebetteten Bauteilen abhängen, fortschrittliche Informations- und Kommunikationstechnologie (wie beispielsweise dem sogenannten Cloud-Computing, der Fernüberwachung oder der Fernwartung) nicht ohne weiteren Aufwand einsetzen.

Ein wesentliches Hindernis für die Netzwerkinteraktion von Bauteilen ist die fehlende Kapazität, komplexe Protokolle wie beispielsweise IP- und Webprotokolle zu unterstützen. Als Folge von deren Komplexität übersteigt die Verwirklichung solcher Protokolle die verfügbaren Möglichkeiten dieser Bausteine. Insbesondere haben alle gegenwärtigen Lösungen noch immer zu große Speichererfordernisse, um auf diesen sehr kleinen Bausteinen umgesetzt zu werden.

Die DE 198 49 194 A1 zeigt ein Anwendungsbeispiel der Gebäude- und Haushaltsautomation.

Die WO 02/17082 A1 offenbart ein Verfahren zur Übertragung von Inhalten über das Internet. Eine Internet-Website wird in Website-Container und Inhalts-Fragmente unterteilt. Auf einen Abruf der Internet-Website hin wird überprüft, ob ein entsprechender Website-Container auf einem Server gespeichert ist und ob dieser gegebenenfalls gespeicherte Website-Container noch gültig ist. Ist dies nicht der Fall, wird der Website-Container von einem Zentralserver angefordert. Analog wird überprüft, ob ein entsprechendes Inhalts-Fragment auf dem Edge-Server gespeichert ist und ob dieses gegebenenfalls gespeicherte Inhalts-Fragment noch gültig ist. Ist dies nicht der Fall, wird das Inhalts-Fragment von dem Zentralserver angefordert. Die gültigen Website-Container und Inhalts-Fragmente werden gemäß vorgegebenen Instruktionen zu der Internet-Website zusammengesetzt.

Aufgabe der vorliegenden Erfindung ist es, Bausteine bereitzustellen, die trotz beschränkter Kapazitäten fortschrittliche Kommunikationsprotokolle unterstützen, um an der Interaktion in Computernetzwerken wie dem Internet teilzunehmen, und die insbesondere komplexe Kommunikationsnachrichten erzeugen können.

### Offenbarung der Erfindung

Erfindungsgemäß wird ein Baustein, Verfahren und ein Kommunikationssystem gemäß den unabhängigen Patentansprüchen 1, 7, 10 und 11 vorgeschlagen.

Der erfindungsgemäße Baustein eignet sich zur Einbettung in ein Kommunikationssystem. Beispiele für solche Bausteine und Kommunikationssysteme sind Feldgeräte wie Aktoren oder Sensoren in Prozesseinrichtungen, z.B. Brand- oder Einbruchmeldeanlagen.

Der erfindungsgemäße Baustein ist eingerichtet, zum Erzeugen einer Nachricht mindestens ein Rumpfobjekt aus einer oder mehreren internen oder externen Speichereinheit(en) auszulesen. Es sei angemerkt, dass es auch Nachrichten mit nur derartigen Inhalten (MTC) geben kann. Solch ein Rumpfobjekt ist ein Nachrichteninhalt, der für einen Nachrichtentyp spezifisch ist (engl. "message type content" MTC), und in allen Nachrichten desselben Typs gleich, wie beispielsweise die Kennzeichen "HTTP/1.1" oder "Content-Type:" in einer HTTP-Nachricht.

Der erfindungsgemäße Baustein ist ferner eingerichtet, mindestens einen für die zu erzeugende Nachricht spezifischen Nachrichteninhalt (engl.: "message instance content" MIC) aus einer Datenstruktur auszulesen. Solch ein Nachrichteninhalt ist variabel für einen Typ von Nachrichten und kann somit in den Nachrichten desselben Typs unterschiedlich sein, wie beispielsweise die Nachrichtenfolgennummer oder eine gegenwärtige Temperatur.

Schließlich ist der erfindungsgemäße Baustein eingerichtet, in einem Kommunikations-Pufferspeicher die entsprechende Nachricht zu erzeugen. Dies umfasst ein Kombinieren der Rumpfobjekte (MTC) und der Nachrichtinhalte (MIC) entsprechend eines Regelwerks mit einer oder mehreren Regel(n) (eng.: "message structure" MS).

Mit anderen Worten lassen sich die erfindungsgemäß verarbeiteten Nachrichten wie folgt beschreiben: Es geht prinzipiell um Nachrichteninhalte, die für alle Nachrichten des selben Typs gleich sind. Also kann eine Nachrichten drei Teile unterteilt werden: Im TC, nämlich Inhalte, die in allen Nachrichten eines bestimmten Typs gleich sind, MIC, nämlich Inhalte, die in jeder Nachricht unterschiedlich sein können und MS, Struktur, die beschreibt, wie die Nachrichten aus den beiden Inhaltsarten aufgebaut sind.

Die Beschreibung und das Erzeugen einer Nachricht durch den erfindungsgemäßen Baustein beruht auf einer Trennung der drei oben genannten Nachrichtencharakteristika. Wenn der Baustein eine Nachricht zu senden hat, werden vorzugsweise benötigte Nachrichteninhalt(e) und das Regelwerk bestimmt. Zusammen können sie als ein Sendeauftrag an eine Kommunikations-Warteschlange geleitet werden. Wenn der Kommunikationskanal frei ist, wird die zugehörige Nachricht im für sie reservierten Kommunikations-Pufferspeicher erzeugt.

Diese Trennung bietet zunächst den Vorteil, dass die Rumpfobjekte (MTC) flexibel auf eine effiziente Weise, auch je nach Bedarf in komprimierter Form, in einem internen oder externen Speicher des Bausteins gespeichert werden können. Sie können sogar über verschiedene Speicherorte verstreut sein. Insbesondere werden die Anforderungen an die Speicherkapazität des Bausteins damit geringer.

Die Trennung bietet weiterhin den Vorteil, dass die verschiedenen Nachrichteninhalte (MIC) in einer effizienten Datenstruktur gespeichert werden können. Die Datenstruktur kann charakteristisch für den Typ der jeweiligen Nachricht sein, in ihrer Effizienz also auf den Typ hin optimiert sein.

Das Regelwerk kann auf kompakte Weise unter Verwendung nur eines Bruchteils desjenigen Speicherplatzes abgelegt werden, den die gesamte Nachricht besetzen würde. Dieses Regelwerk gibt eindeutig an, wie die Nachricht aus den Rumpfobjekten und Nachrichteninhalten zusammenzustellen ist.

Insgesamt kann auf diese Weise eine Einbindung eines großen Speichermoduls vermieden werden, womit Kosten und Energieverbrauch gesenkt werden können.

Schließlich erlaubt die Trennung, die jeweilige Nachricht oder eines oder mehrerer Teil(e) derselben nötigenfalls für eine Sendewiederholung neu zu erzeugen, ohne dass eine Sicherungskopie der Nachricht erforderlich ist.

Entsprechende Vorteile ermöglicht das erfindungsgemäße Verfahren zum Konfigurieren bzw. Realisieren einer Interaktionsfähigkeit eines Bausteins in einem Netzwerk; der Begriff "Interaktionsfähigkeit" ist dabei insbesondere als die Fähigkeit zu verstehen, mit mindestens einer anderen Einheit in dem Netzwerk durch Versenden einer Nachricht in Kontakt zu sein.

Gemäß dem erfindungsgemäßen Verfahren wird bzw. werden zunächst ein oder mehrere allgemeine Typen von Nachrichten festgelegt, die der Baustein versenden können soll. Für jeden der so festgelegten Typen von Nachrichten werde die zum Typ gehörigen Rumpfobjekte in einer oder mehreren externen oder internen Speichereinheit(en) abgelegt. Vorzugsweise wird solch ein Rumpfobjekt jeweils durch ein Unterteilen einer möglichen Nachricht in Rumpfobjekt(e) und Nachrichteninhalt(e) gewonnen.

Das erfindungsgemäße Verfahren umfasst weiterhin den Schritt des Erzeugens einer Datenstruktur, die einen oder mehrere mögliche konkrete Nachrichteninhalt(e) enthält. Schließlich umfasst das erfindungsgemäße Verfahren ein Bereitstellen eines Regelwerks zu jedem Nachrichtentyp. Das Regelwerk umfasst eine oder mehrere Regel(n) dafür, wie eines oder mehrere der zum Typ gehörigen Rumpfobjekte und ein oder mehrere Nachrichteninhalte zu einer Nachricht zusammenzusetzen sind.

Entsprechend umfasst das erfindungsgemäße Kommunikationssystem mindestens einen Baustein, eine oder mehrere Speichereinheiten, die mindestens ein Rumpfobjekt enthält bzw. enthalten, ferner eine Datenstruktur für Nachrichteninhalte und ein Regelwerk mit den oben beschriebenen Regeln.

Bevorzugte Ausführungsformen sind in den Unteransprüchen offenbart.

In einer vorteilhaften Ausführungsform des Bausteins sind die Rumpfobjekte in der oder den Speichereinheit(en) in Form einer indizierten Datenstruktur gespeichert. Solch eine indizierte Datenstruktur kann abhängig von der jeweiligen Anwendung, von Charakteristika des aktuellen Speichermodells und/oder vom verwendeten Speicherschema gewählt sein, z.B. als eine einfache Tabelle oder eine kompliziertere, aber dennoch schlanke Struktur mit einem Zugriffsbeschleunigungsmechanismus.

Rumpfobjekte können durch Identifikatoren charakterisiert sein, die beim Auslesen der entsprechenden Rumpfobjekte verwendet werden. Ein derartiger Identifikator ist vorteilhafterweise einfach strukturiert und/oder benötigt weniger Speicherplatz als das entsprechende Rumpfobjekt. Beispielsweise können mehrere Rumpfobjekte eventuell auch zu verschiedenen Typen in einer Tabelle aufgeführt sein, in der jedem Rumpfobjekt eine laufende Nummer zugeordnet ist. Jedes Rumpfobjekt kann dann vorzugsweise durch Aufrufen des zugehörigen Identifikators aus der Speichereinheit ausgelesen werden. Damit wird der Schritt des Auslesens vereinfacht.

Analoges gilt für die möglichen Nachrichteninhalte in der Datenstruktur: Auch sie können jeweils durch einen zugehörigen Identifikator gekennzeichnet und abgerufen werden.

Es ist vorteilhaft, wenn das Erzeugen der Nachricht ein Überprüfen der momentanen Kapazität des oder eines zu verwendenden Kommunikationskanals umfasst. Beispielsweise kann das Erzeugen ein Feststellen beinhalten, dass solch ein Kommunikationskanal gerade zum Übermitteln der Nachricht bereit ist. Dies erlaubt es, einen geeigneten Zeitpunkt für das Kombinieren von Rumpfobjekt und Nachrichteninhalt zu wählen. Beispielsweise kann der Baustein eingerichtet sein, das oder die Rumpfobjekt(e) und den Nachrichteninhalt erst dann zum Erzeugen der Nachricht an den Kommunikations-Pufferspeicher weiterzuleiten, wenn der Kommunikationskanal bereit zum Übermitteln der Nachricht oder eines Teils derselben ist. Auf diese Weise kann Platz eingespart werden, der für eine Zwischenspeicherung erforderlich wäre.

In einer bevorzugten Ausführungsform beschreiben mehrere Regeln eine Struktur einer Nachricht. Das heißt, dass das zugehörige Regelwerk aus mehreren Regeln besteht. Die Nachricht kann dazu in mehrere Teile aufgeteilt werden, so dass jeweils eine Regel nur einen Teil der Nachricht betrifft. Dieselbe Regel kann in mehreren Regelwerken benutzt werden. Dies erlaubt es, dass verschiedene Nachrichten dieselben Regeln teilen, dass also beispielsweise der Baustein eingerichtet ist, beim Erzeugen einer zweiten Nachricht eine Regel zu verwenden, die auch beim Erzeugen einer ersten Nachricht (beispielsweise anderen Inhalts oder eines anderen Typs als die zweite Nachricht) verwendet wird oder wurde.

So kann ein Teil der Nachricht, wie zum Beispiel ein HTTP-Header mit einer Regel beschrieben werden, die für alle HTTP-Nachrichten verwendet wird.

Der Baustein kann eingerichtet sein, die Nachricht in mehreren Teilen zu versenden, beispielsweise aufgrund der Größe der Nachricht. Vorzugsweise wird dabei ein Teil der Nachricht erst während des Versendens oder erst nach dem Versenden eines anderen Teils der Nachricht erzeugt. Der erstgenannte Teil muss also nicht erst im Baustein zwischengespeichert werden. So kann z.B. bei einer Nachricht, die als Ganzes zu groß für den Kommunikations-Pufferspeicher ist, Platz zum Zwischenspeichern eingespart werden.

Vorteilhaft ist eine Ausführungsform, bei der Nachrichtenrümpfe verschiedener Nachrichtentypen in einer gemeinsamen Datenstruktur abgelegt werden. So kann vermieden werden, dass mehrere Kopien eines Nachrichtenrumpfes, der für verschiedene Nachrichten gemeinsam zu verwenden ist, gespeichert werden müssen.

In einer Ausführungsform ist der Baustein eingerichtet, mindestens ein Rumpfobjekt aus einer externen Speichereinheit auszulesen. Vorteilhaft ist es, wenn der Baustein mindestens eine interne Speichereinheit umfasst und auf mindestens eine externe Speichereinheit zugreifen kann, und wenn in der mindestens einen internen Speichereinheit Rumpfobjekte bis zu einer vorbestimmten Datengröße abgelegt sind, wohingegen größere Rumpfobjekte in der mindestens einen externen Speichereinheit abgelegt werden.

Entsprechend umfasst das Verfahren zum Konfigurieren einer Interaktionsfähigkeit eines Bausteins in einer vorteilhaften Ausführungsform, dass ein zu einem festgelegten Typ gehöriges Rumpfobjekt in einer Datenstruktur außerhalb des Bausteins, also extern abgelegt wird. Vorzugsweise umfasst das Verfahren dabei einen Schritt des Vergleichens, in dem für jedes abzulegende Rumpfobjekt dessen Datengröße mit einem Maximum verglichen wird. Übersteigt die Datengröße das Maximum, wird das Rumpfobjekt vorzugsweise extern gespeichert, andernfalls intern.

Auf diese Weise kann die Speicherung des Rumpfobjekts bzw. der Rumpfobjekte an die begrenzte Kapazität des Bausteins angepasst werden.

Das genannte Maximum kann dabei vorbestimmt sein oder variabel sein und z.B. als ein Schritt des Verfahrens für den Baustein festgesetzt werden.

In einer Ausführungsform der vorliegenden Erfindung ist der Baustein eingerichtet, neben einem Regelwerk, das die Regel(n) enthält, einen oder mehrere Serialisierungsoperatoren anzuwenden, um damit eine Serialisierung abzustimmen. Solch ein Serialisierungsoperator kann dazu eingesetzt werden, den serialisierten Nachrichtenteil zu manipulieren, z.B. durch das Einfügen oder Ändern einer Kennzeichnung an einer vorbestimmten Stelle in der serialisierten Nachricht. Beispielsweise kann solch ein Operator zur Unterstützung des Modus "HTTP Chuncked Encoding" eingesetzt werden, um den Rumpf der HTTP-Nachricht in Teilen zu zerlegen und die Chunk-Längen zwischen diesen Teilen einzufügen. Auf diese Weise können dieselben Serialisierungsregeln für den HTTP-Rumpf sowohl im normalen als auch im chunked Modus verwendet werden.

In einer Ausführungsform des erfindungsgemäßen Verfahrens zur Konfiguration einer Interaktionsfähigkeit eines Bausteins in einem Netzwerk erfolgt das Festlegen des oder der allgemeinen Typen von Nachrichten, die der Baustein versenden können soll, automatisch mit einer Software-Anwendung oder einer Hardwareeinheit, die maschinell die allgemeinen Typen auswählt und den benötigten Code und/oder weitere Artefakte erzeugt. Diese Software-Anwendung oder Hardwareeinheit kann zusätzlich Optimierungsalgorithmen in Bezug auf Speicherverbrauch und/oder Laufzeit umfassen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.
Figur 1 zeigt schematisch einen Baustein, der gemäß einer bevorzugten Ausführungsform der Erfindung konfiguriert ist.
Figur 2 zeigt ein Erzeugen einer Nachricht mit mehreren Teilen gemäß einer bevorzugten Ausführungsform der Erfindung
Figur 3 zeigt ein Kommunikationssystem entsprechend einer bevorzugten Ausführungsform der vorliegenden Erfindung

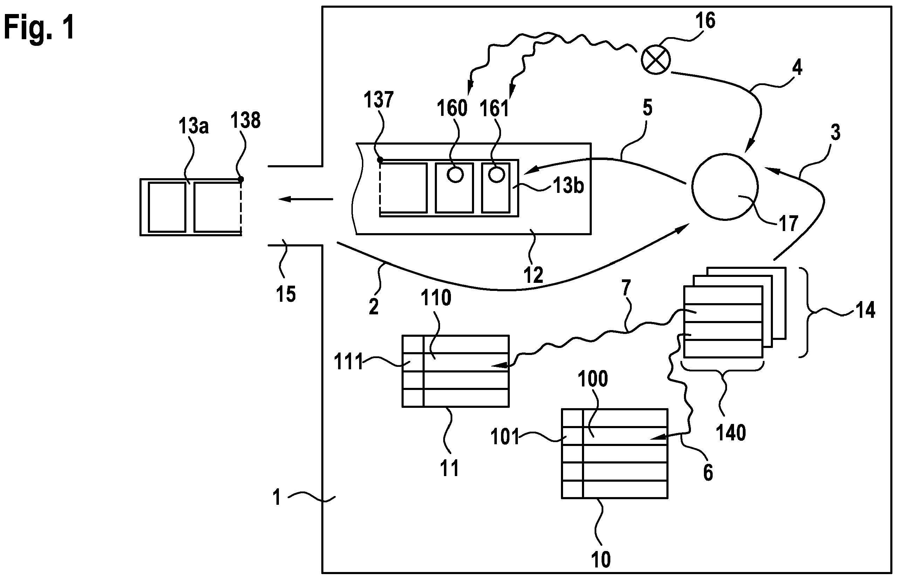

Der in der Figur 1 dargestellte Baustein 1 umfasst eine Speicherstruktur 10 mit mehreren Rumpfobjekten 110, eine Datenstruktur 11, ein Regelwerk 14 mit mehreren Regeln 140, eine Serialisierungseinheit 17 und einen Pufferspeicher 12. Über einen Kommunikationskanal 15 kann der Baustein in einem Kommunikationssystem interagieren.

In der bevorzugten Ausführungsform handelt es sich bei dem Baustein 1 um einen integrierten Schaltkreis (IC - integrated circuit). Der integrierte Schaltkreis besteht vorzugsweise aus einer elektronischen Schaltung auf einem Substrat, insbesondere auf einem Halbleitersubstrat.

In Figur 1 sind die Speicherstruktur 10 und das Regelwerk 14 in dem Baustein 1 selbst angeordnet. Alternativ könnten sie in einer externen Speichereinheit sein, die an den Baustein angeschlossen ist.

Der dargestellte Baustein 1 ist eingerichtet, zum Erzeugen einer Nachricht 13 einen Schritt 2 des Feststellens, dass ein zuständiger Kommunikationskanal 15 zum Versenden der Nachricht bereit ist und somit der Kommunikationspufferspeicher 12 reserviert ist.

Weiterhin ist in Figur 1 dargestellt, dass der Baustein 1 zum Erzeugen der Nachricht 13 in einem Schritt 3 das Regelwerk 14 durch die Serialisierungseinheit 17 ausgelesen und interpretiert wird. Die Regel 140 besagt, dass an einer vorbestimmten Stelle das Rumpfobjekt 100 kommt und vom Nachrichteninhalt 110 gefolgt wird. Das Rumpfobjekt 100 ist durch einen Identifikator 101 charakterisiert, mit dem das Rumpfobjekt in der Speicherstruktur 10 verknüpft ist. Durch Abrufen des Indikators 101 kann daher das Rumpfobjekt 100 aus der Speichereinheit ausgelesen werden. Analog dazu ist der Nachrichteninhalt 110 durch einen Identifikator 111 charakterisiert. So wird der Nachrichteninhalt 110 durch das Abrufen des Identifikators 111 aus der Datenstruktur 11 ausgelesen.

In einem Schritt 4 wird der Serialisierungsoperator 16 einbezogen, um die Serialisierung der Nachricht 13 abzustimmen. Dadurch werden zwei Kennzeichnungen 160 und 161 in die Nachricht eingefügt.

In einem Schritt 5 wird die Nachricht 13 von der Serialisierungseinheit 17 durch das Kombinieren des Rumpfobjekts 100 und des Nachrichteninhalts 110, und zwar gemäß einer Regel 140, die in einem Regelwerk 14 abgelegt ist, in den Kommunikations-Pufferspeicher 12 serialisiert.

Die in Figur 1 dargestellte Nachricht 13 besteht aus zwei Teilen 13a und 13b. Positionsmarkierungen 137 und 138 markieren die Schnittstellen, also die jeweiligen Endpunkte der beiden Teile der Nachricht.

Wie in Figur 1 dargestellt ist, wird der zweite Teil 13b der Nachricht im Kommunikations-Pufferspeicher 12 erzeugt, während der erste Teil 13a der Nachricht bereits versandt wurde. So kann eine Nachricht, deren Größe die begrenzte Kapazität insbesondere des Kommunikations-Pufferspeichers übersteigt, in Teilen erzeugt und verschickt werden.

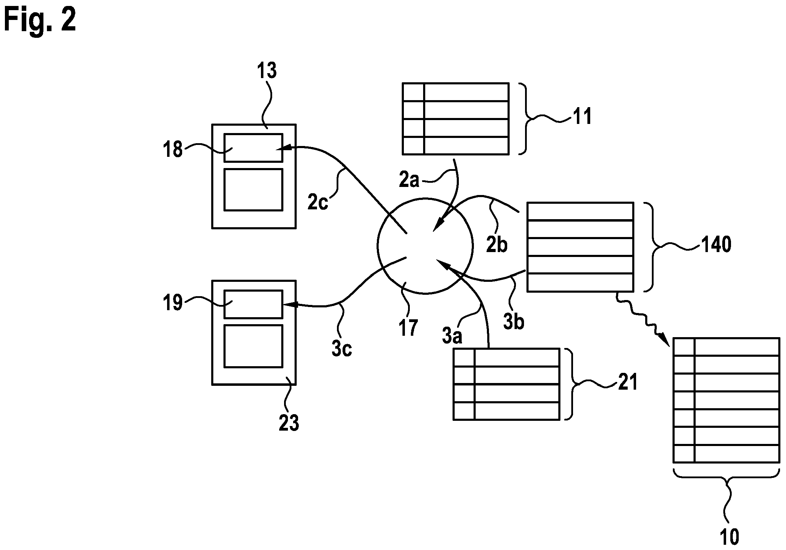

In Figur 2 ist schematisch dargestellt, wie ein Baustein eine Regel 140 bei dem Erzeugen der Nachricht 13 als auch der Nachricht 23 entsprechend der vorliegenden Erfindung benutzt. Im Unterschied zur Figur 1 ist die Regel 140 ein Teil der Regelwerken der beiden Nachrichten 13 und 23. Zum Erzeugen der Nachricht 13 wendet die Serialisierungseinheit 17 in den Schritten 2a und 2b unter Anderem die Regel 140 auf die zur Nachricht 13 gehörenden Datenstruktur 11, in der sich die Inhalte der Nachricht 13 befinden, an. Dadurch wird im Schritt 2c der Teil 18 der Nachricht 13 erzeugt. Zum Erzeugen der Nachricht 23 wendet die Serialisierungseinheit 17 in den Schritten 3a und 3b unter Anderem die Regel 140 dieses Mal auf die zur Nachricht 14 gehörenden Datenstruktur 21 an. Dadurch wird im3c der Teil 19 der Nachricht 23 erzeugt. Die Rumpfobjekte für die beiden Nachrichten 13 und 23 können sich in Speicherstruktur 10 befinden und bei der Erzeugung der beiden Nachrichten ausgelesen werden.

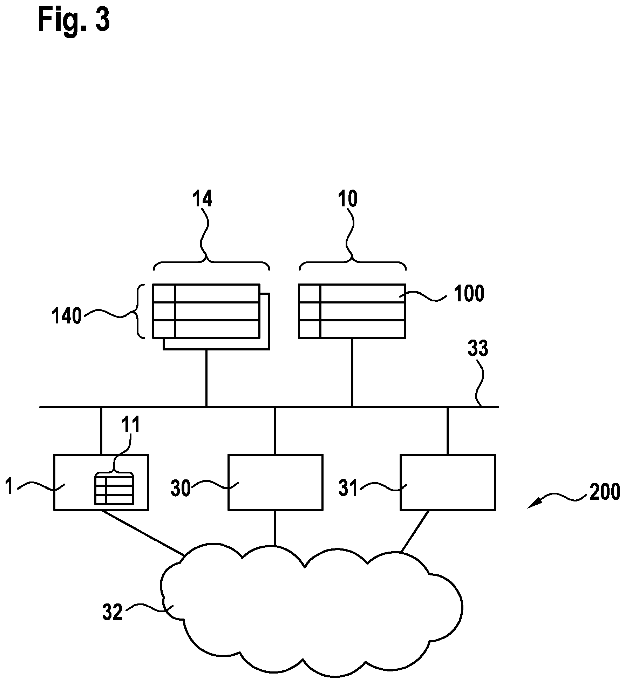

In Figur 3 ist schematisch ein Kommunikationssystem 200 gezeigt, das Bausteine 1, 30 und 31 umfasst, die über ein Kommunikationsmedium 32 miteinander kommunizieren können. Das Kommunikationsmedium kann beispielsweise ein optischer Bus oder ein Leitungsbus sein. Das Kommunikationssystem umfasst eine Speichereinheit 10 mit Rumpfobjekten 100 und ein Regelwerk 14 mit einer Regel 140. In der gezeigten Ausführungsform sind die Speichereinheit 10 und das Regelwerk 14 von allen Bausteinen 1, 30 und 31 auf einen effizienten Weg 33 erreichbar. Das kann durch einen effizient zugreifbaren Speicher oder durch die Bereitstellen einer Kopie der von 11 und 14 auf alle Bausteine realisiert werden. In einer alternativen Ausführungsform kann jeweils nur ein Baustein auf eine externe Speichereinheit 10 und/oder ein extern gespeichertes Regelwerk 14 zugreifen, oder die Speichereinheit 10 und/oder das Regelwerk 11 ist bzw. sind intern in einem Baustein angeordnet.

Das in 3 gezeigte Kommunikationssystem umfasst eine Datenstruktur 11, die in dem Baustein 1 angeordnet ist. Diese Struktur enthält die Nachrichteninhalte einer Nachricht, die der Baustein 1 versenden will. Der Baustein 1 kann die Nachricht in einer komprimierten Form versenden. Dazu sendet der Baustein 1 nur die Datenstruktur 11, so dass der empfängende Baustein die Nachricht mit Hilfe des zugehörigen Regelwerks 14 und die Speichereinheit mit den Rumpfobjekten 10 erstellen.

## Patentansprüche

1. Baustein (1) zur Einbettung in ein Kommunikationssystem, wobei der Baustein eingerichtet ist, zum Erzeugen einer Nachricht (13) folgende Schritte auszuführen:
Auslesen (6) mindestens eines Rumpfobjekts (100), das einen allgemeinen Typ der Nachricht kennzeichnet, aus einer oder mehreren internen oder externen Speichereinheit/en (10);
Auslesen (7) mindestens eines Nachrichteninhalts (110), der spezifisch für die Nachricht ist, aus einer Datenstruktur (11);
**gekennzeichnet durch**
das Erzeugen der Nachricht in einem Kommunikations-Pufferspeicher (12), das ein Kombinieren (5) durch eine Serialisierungseinheit (17) des mindestens einen Rumpfobjekts und des Nachrichteninhalts entsprechend einer oder mehrerer Regel/n (140) umfasst,
wobei das Erzeugen der Nachricht ein Feststellen (2) umfasst, dass ein zuständiger Kommunikationskanal (15) zum Übermitteln der Nachricht oder eines Teils (13a, 13b) derselben bereit ist.

2. Baustein gemäß Anspruch 1, wobei die Speichereinheit/en mindestens ein weiteres Rumpfobjekt desselben und/oder mindestens ein weiteres Rumpfobjekt eines anderen Typs von Nachricht enthält.

3. Baustein gemäß Anspruch 1 oder 2, wobei
das Rumpfobjekt (100) in der oder den Speichereinheiten durch einen Identifikator (101) charakterisiert ist, der bei dem Auslesen des Rumpfobjekts verwendet wird
und/oder wobei der Nachrichteninhalt (110) in der Datenstruktur durch einen Identifikator (111) charakterisiert ist, der bei dem Auslesen des Nachrichteninhalts verwendet wird.

4. Baustein gemäß einem der vorstehenden Ansprüche, wobei das mindestens ein Rumpfobjekt und der mindestens eine Nachrichteninhalt erst dann in den Kommunikations-Pufferspeicher (12) weitergeleitet werden, wenn der Kommunikationskanal zum Übermitteln der Nachricht oder eines Teils derselben bereit ist.

5. Baustein gemäß einem der vorstehenden Ansprüche, der eingerichtet ist, die Nachricht in mehreren Teilen (13a, 13b) zur versenden, wobei ein Nachrichtenteil erzeugt wird, während ein anderer Nachrichtenteil versendet oder zum Versenden bereitgestellt wird,
wobei vorzugsweise Positionsmarkierungen (137, 138) zum Markieren eines Endes des Nachrichtenteils und/oder des anderen Nachrichtenteils verwendet werden.

6. Baustein gemäß einem der vorstehenden Ansprüche, der eingerichtet ist, neben einem Regelwerk (14), das die eine oder die mehreren Regel/n (140) enthält, einen oder mehrere Serialisierungsoperatoren (16) zum Abstimmen einer Serialisierung anzuwenden,
wobei beispielsweise der oder einer der Serialisierungsoperator/en verwendet wird, eine Kennzeichnung (160, 161) an einer Stelle in einer serialisierten Nachricht hinzuzufügen oder zu ändern.

7. Verfahren zum Konfigurieren einer Interaktionsfähigkeit eines in einem Kommunikationssystem eingebetteten Bausteins in einem Netzwerk, das die folgenden Schritte umfasst:
Festlegung von einem oder mehreren allgemeinen Typen von Nachrichten (13), die der Baustein versenden können soll,
für jeden der festgelegten Typen von Nachrichten
Ablegen mindestens eines zum Typ gehörigen Rumpfobjektes (100) in einer Speichereinheit (10), die innerhalb oder außerhalb des Bausteins angeordnet ist;
Erzeugen einer Datenstruktur (11) mit mindestens einem möglichen Nachrichteninhalt (110);
**gekennzeichnet durch**
das Bereitstellen eines oder mehrerer Regelwerke (14), wobei das Regelwerk für mindestens einen der festgelegten Typen eine oder mehrere Regeln (140) dafür umfasst, wie eines oder mehrere der zu dem Typ gehörigen Rumpfobjekte und ein oder mehrere Nachrichteninhalte der Datenstruktur zu einer Nachricht zusammenzusetzen sind,
wobei das Zusammensetzen der Nachricht ein Feststellen (2) umfasst, dass ein zuständiger Kommunikationskanal (15) zum Übermitteln der Nachricht oder eines Teils (13a, 13b) derselben bereit ist.

8. Verfahren gemäß Anspruch 7, wobei das Rumpfobjekt in einer Indexstruktur abgelegt wird, beispielsweise einer Tabelle oder einer vereinfachten Struktur für schnellen Zugriff mit oder ohne Pufferspeicherung.

9. Verfahren gemäß Anspruch 7 oder 8, wobei eine oder mehrere Regeln (140) zu den Regelwerken verschiedener Nachrichtentypen sind,
wobei jede solcher Regeln festlegt, wie das oder die mehreren Rumpfobjekte und die ein oder mehreren Nachrichteninhalte der Datenstruktur jeder Nachricht zu einer Nachricht zusammenzusetzen sind.

10. Kommunikationssystem mit mehreren in dem Kommunikationssystem eingebetteten Bausteinen (1), entsprechend den Ansprüche 1-6, und einem Kommunikationsmedium (32), wobei die Bausteine (1) über das Kommunikationsmedium (32) miteinander kommunizieren, ein Baustein enhält: eine Datenstruktur, die einen oder mehrere mögliche Nachrichteninhalte enthält, der bzw. die spezifisch für eine Nachricht ist/sind,
eine oder mehrere Speichereinheit/en, die für einen Typ oder für mehrere Typen von Nachrichten ein oder mehrere zugehörige Rumpfobjekte enthält, das bzw. die den jeweiligen Typ kennzeichnet;
im Weiteren **gekennzeichnet durch**
ein Regelwerke aus einer oder mehreren Regeln, die festlegt bzw. festlegen, wie mindestens ein Rumpfobjekt in der bzw. den Speichereinheit/en und mindestens ein Nachrichteninhalt aus einer Datenstruktur zu einer Nachricht zu kombinieren sind,
wobei das Kombinieren der Nachricht Mittel zum Feststellen (2) umfasst, dass ein zuständiger Kommunikationskanal (15) zum Übermitteln der Nachricht oder eines Teils (13a, 13b) derselben bereit ist.

11. Verfahren zum Erzeugen einer Nachricht (13) mittels eines in einem Kommunikationssystems eingebetteten Bausteins, insbesondere mittels eines Bausteins (1) gemäß einem der Ansprüche 1 bis 6, mit folgenden Schritten:
Auslesen (6) mindestens eines Rumpfobjekts (100), das einen allgemeinen Typ der Nachricht kennzeichnet, aus einer oder mehreren internen oder externen Speichereinheit/en (10);
Auslesen (7) mindestens eines Nachrichteninhalts (110), der spezifisch für die Nachricht ist, aus einer Datenstruktur (11);
**gekennzeichnet durch**
das Erzeugen der Nachricht in einem Kommunikations-Pufferspeicher (12), das ein Kombinieren (5) durch eine Serialisierungseinheit (17) des mindestens einen Rumpfobjekts und des Nachrichteninhalts entsprechend einer oder mehrerer Regel/n (140) umfasst,
wobei das Erzeugen der Nachricht ein Feststellen (2) umfasst, dass ein zuständiger Kommunikationskanal (15) zum Übermitteln der Nachricht oder eines Teils (13a, 13b) derselben bereit ist.

## Claims

1. Chip (1) for embedding in a communication system, wherein the chip is configured to produce a message (13) by carrying out the following steps:
reading (6) at least one body object (100), which denotes a general type of the message, from one or more internal or external memory unit(s) (10);
reading (7) at least one message content (110), which is specific to the message, from a data structure (11);
**characterized by**
the producing of the message in a communication buffer memory (12), which comprises combining (5), by means of a serialization unit (17), the at least one body object and the message content in accordance with one or more rule(s) (140),
wherein the producing of the message comprises establishing (2) that an appropriate communication channel (15) is ready to transmit the message or a portion (13a, 13b) thereof.

2. Chip according to Claim 1, wherein the memory unit(s) contain(s) at least one further body object of the same and/or at least one further body object of a different type of message.

3. Chip according to Claim 1 or 2, wherein
the body object (100) is **characterized in** the memory unit(s) by an identifier (101) that is used when reading the body object
and/or wherein the message content (110) is **characterized in** the data structure by an identifier (111) that is used when reading the message content.

4. Chip according to one of the preceding claims, wherein the at least one body object and the at least one message content are not forwarded to the communication buffer memory (12) until the communication channel is ready to transmit the message or a portion thereof.

5. Chip according to one of the preceding claims, configured to send the message in multiple portions (13a, 13b), wherein one message portion is produced while another message portion is sent or provided for sending,
wherein preferably position markers (137, 138) are used to mark an end of the message portion and/or of the other message portion.

6. Chip according to one of the preceding claims, configured to apply, besides a set of rules (14) containing the one or more rule(s) (140), one or more serialization operators (16) for coordinating a serialization,
wherein for example the or one of the serialization operator(s) is used to add or change a label (160, 161) at a point in a serialized message.

7. Method for configuring an interaction capability of a chip embedded in a communication system in a network, comprising the following steps:
stipulating one or more general types of messages (13) that the chip is supposed to be able to send,
for each of the stipulated types of messages:
storing at least one body object (100) associated with the type in a memory unit (10) arranged inside or outside the chip;
producing a data structure (11) having at least one possible message content (110);
**characterized by** the
providing of one or more set(s) of rules (14), wherein the set of rules for at least one of the stipulated types comprises one or more rule(s) (140) for how one or more of the body object (s) associated with the type and one or more message content(s) of the data structure should be put together to form a message,
wherein the putting-together of the message comprises establishing (2) that an appropriate communication channel (15) is ready to transmit the message or a portion (13a, 13b) thereof.

8. Method according to Claim 7, wherein the body object is stored in an index structure, for example a table or a simplified structure for fast access with or without buffer storage.

9. Method according to Claim 7 or 8, wherein one or more rule(s) (140) are associated with the sets of rules of different message types,
wherein each of such rules stipulates how the body object or the multiple body objects and the one or more message content(s) of the data structure of each message should be put together to form a message.

10. Communication system having multiple chips (1) embedded in the communication system, in accordance with Claims 1-6, and a communication medium (32), wherein the chips (1) communicate with one another via the communication medium (32), and a chip contains: a data structure containing one or more possible message content(s) specific to a message,
one or more memory unit(s) that contain(s), for a type or for multiple types of messages, one or more associated body objects denoting the respective type; moreover **characterized by**
a set of rules comprising one or more rule(s) stipulating how at least one body object in the memory unit(s) and at least one message content from a data structure should be combined to form a message,
wherein the combining of the message comprises means for establishing (2) that an appropriate communication channel (15) is ready to transmit the message or a portion (13a, 13b) thereof.

11. Method for producing a message (13) by means of a chip embedded in a communication system, in particular by means of a chip (1) according to one of Claims 1 to 6, having the following steps:
reading (6) at least one body object (100), which denotes a general type of the message, from one or more internal or external memory unit(s) (10);
reading (7) at least one message content (110), which is specific to the message, from a data structure (11);
**characterized by** the
producing of the message in a communication buffer memory (12), which comprises combining (5), by means of a serialization unit (17), the at least one body object and the message content in accordance with one or more rule(s) (140),
wherein the producing of the message comprises establishing (2) that an appropriate communication channel (15) is ready to transmit the message or a portion (13a, 13b) thereof.

## Revendications

1. Composant (1) destiné à être incorporé dans un système de communication, le composant étant conçu pour exécuter les étapes suivantes en vue de générer un message (13) :
lecture (6) d'au moins un objet de corps (100) qui identifie un type général du message, à partir d'une ou plusieurs unités de mémoire (10) internes ou externes ;
lecture (7) d'au moins un contenu de message (110) qui est spécifique au message, à partir d'une structure de données (11) ;
**caractérisé par**
la génération du message dans une mémoire tampon de communication (12), qui comprend une combinaison (5) par une unité de sérialisation (17) de l'au moins un objet de corps et du contenu du message conformément à une ou plusieurs règles (140)
la génération du message comprenant une constatation (2) qu'un canal de communication (15) compétent est prêt pour la communication du message ou d'une partie (13a, 13b) de celui-ci.

2. Composant selon la revendication 1, la ou les unités de mémoire contenant au moins un objet de corps supplémentaire du même type de message et/ou au moins un objet de corps supplémentaire d'un autre type de message.

3. Composant selon la revendication 1 ou 2, l'objet de corps (100) dans la ou les unités de mémoire étant **caractérisé par** un identificateur (101) qui est utilisé lors de la lecture de l'objet de corps et/ou le contenu du message (110) dans la structure de données étant **caractérisé par** un identificateur (111) qui est utilisé lors de la lecture du contenu du message.

4. Composant selon l'une des revendications précédentes, l'au moins un objet de corps et l'au moins un contenu de message n'étant transférés dans la mémoire tampon de communication (12) que lorsque le canal de communication servant à communiquer le message ou une partie de celui-ci est prêt.

5. Composant selon l'une des revendications précédentes, lequel est conçu pour envoyer le message en plusieurs parties (13a, 13b), une partie de message étant générée pendant qu'une autre partie de message est envoyée ou est mise à disposition pour l'envoi,
des marquages de position (137, 138) servant à marquer une fin de la partie de message et/ou de l'autre partie de message étant de préférence utilisés.

6. Composant selon l'une des revendications précédentes, lequel est conçu pour appliquer, outre un ensemble de règles (14) qui contient ladite ou les plusieurs règles (140), un ou plusieurs opérateurs de sérialisation (16) destinés à accorder une sérialisation, le ou l'un des opérateurs de sérialisation étant utilisé, par exemple, pour insérer ou modifier une identification (160, 161) en un endroit dans un message sérialisé.

7. Procédé de configuration d'une aptitude à l'interaction d'un composant incorporé dans un système de communication dans un réseau, lequel comprend les étapes suivantes :
définition d'un ou plusieurs types généraux de messages (13) que le composant doit pouvoir envoyer,
pour chacun des types de message définis
stockage d'au moins un objet de corps (100) associé au type dans une unité de mémoire (10) qui est disposée à l'intérieur ou à l'extérieur du composant ;
génération d'une structure de données (11) avec au moins un contenu de message (110) possible ;
**caractérisé par** la
mise à disposition d'un ou plusieurs ensembles de règles (14), l'ensemble de règles comprenant une ou plusieurs règles (140) pour au moins l'un des types définis à propos de la manière dont un ou plusieurs des objets de corps associés au type et un ou plusieurs contenus de message de la structure de données sont à assembler en un message, l'assemblage du message comprenant une constatation (2) qu'un canal de communication (15) compétent est prêt pour la communication du message ou d'une partie (13a, 13b) de celui-ci.

8. Procédé selon la revendication 7, l'objet de corps étant stocké dans une structure d'index, par exemple une table ou une structure simplifiée pour un accès rapide avec ou sans mise en mémoire tampon.

9. Procédé selon la revendication 7 ou 8, une ou plusieurs règles (140) étant associées aux ensembles de règles de différents types de message,
chacune desdites règles définissant comment le ou les plusieurs objets de corps et un ou plusieurs contenus de message de la structure de données de chaque message sont à assembler en un message.

10. Système de communication comprenant plusieurs composants (1) selon les revendications 1 à 6, incorporés dans le système de communication, et un support de communication (32), les composants (1) communiquant entre eux par le biais du support de communication (32), un composant contenant : une structure de données qui contient un ou plusieurs contenus de message possible, qui est ou sont spécifiques à un message,
une ou plusieurs unités de mémoire qui contiennent, pour un ou plusieurs types de messages, un ou plusieurs objets de corps associés qui identifie(nt) le type respectif ; **caractérisé en outre par** un ensemble de règles composé d'une ou plusieurs règles, qui définit ou définissent comment au moins un objet de corps dans la ou les unités de mémoire et au moins un contenu de message issu d'une structure de données sont à combiner en un message,
la combinaison du message comprenant des moyens destinés à constater (2) qu'un canal de communication (15) compétent est prêt pour la communication du message ou d'une partie (13a, 13b) de celui-ci.

11. Procédé pour générer un message (13) au moyen d'un composant incorporé dans un système de communication, notamment au moyen d'un composant (1) selon l'une des revendications 1 à 6, comprenant les étapes suivantes :
lecture (6) d'au moins un objet de corps (100) qui identifie un type général du message, à partir d'une ou plusieurs unités de mémoire (10) internes ou externes ;
lecture (7) d'au moins un contenu de message (110) qui est spécifique au message, à partir d'une structure de données (11) ; **caractérisé par** la
génération du message dans une mémoire tampon de communication (12), qui comprend une combinaison (5) par une unité de sérialisation (17) de l'au moins un objet de corps et du contenu du message conformément à une ou plusieurs règles (140)
la génération du message comprenant une constatation (2) qu'un canal de communication (15) compétent est prêt pour la communication du message ou d'une partie (13a, 13b) de celui-ci.
